(19) Europäisches Patentamt European Patent Office Office européen des brevets

(11) **EP 4 653 826 A1**

(12) **EUROPEAN PATENT APPLICATION**

(43) Date of publication:
**26.11.2025 Bulletin 2025/48**

(21) Application number: **25176545.9**

(22) Date of filing: **15.05.2025**

(51) International Patent Classification (IPC):
*G01F 25/10* (2022.01)   *A01C 23/00* (2006.01)
*A01M 7/00* (2006.01)   *B05B 12/00* (2018.01)

(52) Cooperative Patent Classification (CPC):
**G01F 25/10; A01C 23/007; A01M 7/0089;**
**B05B 1/20; B05B 12/008; B05B 12/085**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **23.05.2024 US 202463651099 P**

(71) Applicant: **Intelligent Agricultural Solutions LLC**
**Fargo, ND 58102 (US)**

(72) Inventors:
• **Zietz, John Michael**
**Fargo (US)**
• **Bjertness, Dan**
**Fargo (US)**
• **Axvig, Nathan**
**Fargo (US)**
• **Vanhoever, Lucas**
**Fargo (US)**

(74) Representative: **AGCO Intellectual Property**
**Department**
**AGCO Limited**
**Abbey Park Stoneleigh**
**Kenilworth CV8 2TQ (GB)**

(54) **METHODS OF MEASURING A FLOWRATE THROUGH A PULSE WIDTH MODULATION VALVE, AND RELATED AGRICULTURAL MACHINES AND MONITORING SYSTEMS**

(57)    A method of operating a crop sprayer includes determining a duty cycle of a pulse width modulation valve, measuring a flowrate of a fluid through the pulse width modulation valve to determine a measured flowrate, and applying a correction factor to the measured flowrate to determine a corrected flowrate based on the duty cycle. A crop sprayer includes a chassis, a product tank containing a fluid, a boom comprising at least one boom arm configured to laterally extend from the chassis, and a nozzle assembly operably coupled to the at least one boom arm and in fluid communication with the product tank. The nozzle assembly includes a sensor housing, a flow meter, and a pulse width modulation valve. The crop sprayer includes a sensor monitoring system configured to determine a corrected flowrate through the nozzle assembly. Related control systems are also disclosed.

**FIG. 1**

**EP 4 653 826 A1**

**Description**

**CROSS-REFERENCE TO RELATED APPLICATION**

N/A

**FIELD**

Embodiments of the present disclosure relate generally to an agricultural machine including pulse width modulation valves, and more particularly to methods of determining a flowrate of fluid through the pulse width modulation valves based on a duty cycle and a correction factor, and to related agricultural machines and control systems.

**BACKGROUND**

High crop yields of modern agribusiness may require application of fertilizers, pesticides, fungicides, and/or herbicides. These chemicals are dispersed onto high-acreage fields using specialized machines mounted on or towed by a vehicle. An example of such a machine is a self-propelled crop sprayer.

A common design for a self-propelled crop sprayer includes a chassis with a tank, boom arms, and nozzles connected to the boom arms. The tank contains liquid product, such as fertilizers, pesticides, fungicides, and/or herbicides. Boom arms extend outward from the sides of the chassis. Boom plumbing contains supply lines and nozzles spaced along the length of the boom arms at a spacing corresponding to the spray pattern of the nozzles. In operation, as the crop sprayer crosses the field, liquid is pumped from the tank through the supply lines along the boom arms, and out through the nozzles. This allows the self-propelled sprayer to distribute the liquid along a relatively wide path. The length of conventional boom arms may vary from, for example, 6 meters (18 feet) up to 46 meters (150 feet), but shorter or longer booms are possible. The boom arms typically swing in for on-road transport and out for field-spraying operations.

Conventionally, the nozzles are connected in series such that the product flows through a pipe and/or hose from one nozzle to another. Booms have been of the "wet boom" type, where the boom comprises a frame member with a pipe mounted thereon, and the liquid passes through the pipe into nozzles mounted on the pipe and liquidly connected thereto, or a "dry boom" type, where the nozzles are mounted to the frame member and liquid passes to the nozzles through a hose which is connected between the nozzles. The nozzles are attached to the pipe or frame with brackets at desired intervals along the boom arm.

While spraying with the crop sprayer, it is desirable to monitor the application rate of the chemicals being applied, which depends on the flowrate of the chemicals through the nozzles, and the speed of the nozzles relative to the ground and/or crops to which the chemicals are applied (e.g., the ground speed). Overuse of chemicals can lead to product waste, while underuse may cause an area to be inadequately treated, leading to reduced crop yields. In addition, it is desirable to maintain a uniform spray pattern from the nozzles to facilitate uniform application of the chemicals to the ground and/or crops.

**BRIEF SUMMARY**

According to an aspect of the disclosure, a method of measuring a flowrate through a pulse width modulation valve comprises determining a duty cycle of the pulse width modulation valve, measuring a flowrate of a fluid through the pulse width modulation valve to determine a measured flowrate, and applying a correction factor to the measured flowrate to determine a corrected flowrate based on the duty cycle. In some embodiments, the pulse width modulation valve is associated with a nozzle assembly.

In some embodiments, measuring a flowrate of a fluid through the pulse width modulation valve comprises measuring a flowrate of a liquid through the pulse width modulation valve.

Determining a duty cycle of the pulse width modulation valve may include determining the duty cycle of the pulse width modulation valve based on at least one of a change in a pressure of the fluid, an acceleration of an actuator of the pulse width modulation valve, a magnetic field proximate to the pulse width modulation valve, or a control signal provided to the pulse width modulation valve.

Measuring a flowrate of a fluid through the pulse width modulation valve may include measuring the flowrate based on a frequency of a projectile rotating within a body in fluid communication with the pulse width modulation valve. In some embodiments, measuring the flowrate based on a frequency of a projectile rotating within the body comprises measuring the frequency of the projectile with an optical sensor.

The method may further include determining the correction factor as a function of the duty cycle of the pulse width modulation valve. In some embodiments, determining the correction factor as a function of the duty cycle of the pulse width modulation valve comprises measuring a flowrate at a plurality of pressures and a plurality of duty cycles through another pulse width modulation valve that is substantially the same as the pulse width modulation valve. The correction factor may be determined in a laboratory. In some embodiments, the flowrate at the plurality of pressures and the plurality of duty cycles of the another pulse width modulation valve may be determined in the laboratory.

In some aspects, the method further includes measuring a pressure of the fluid. In some embodiments, the pressure of the fluid is measured in a nozzle assembly in fluid communication with the pulse width modulation valve. Applying a correction factor to the measured flowrate to determine a corrected flowrate based on the duty cycle may include applying a correction factor to the measured flowrate to determine a corrected flowrate based on the duty cycle and the pressure of the fluid in the nozzle assembly. In some aspects, the method further includes measuring a modulation frequency of the pulse width modulation valve, and applying the correction factor includes applying the correction factor to the measured flowrate to determine a corrected flowrate based on the duty cycle and the modulation frequency of the pulse width modulation valve.

In some embodiments, applying a correction factor to the measured flowrate to determine a corrected flowrate based on the duty cycle comprises applying a correction factor comprising a mathematical equation based on at least the duty cycle.

Applying a correction factor to the measured flowrate to determine a corrected flowrate based on the duty cycle may include determining the correction factor with a look-up table based on at least the duty cycle.

In some embodiments, a crop sprayer comprises a chassis, a product tank containing a fluid, a boom comprising at least one boom arm configured to laterally extend from the chassis, and a nozzle assembly operably coupled to the at least one boom arm and in fluid communication with the product tank. The nozzle assembly comprises a sensor housing, a flow meter configured to measure a flowrate of fluid within the nozzle assembly, and a pulse width modulation valve in fluid communication with the sensor housing. The crop sprayer further comprises a sensor monitoring system configured to determine a corrected flowrate of the fluid within the nozzle assembly based on a measured flowrate of the fluid through the nozzle assembly and a correction factor based on a duty cycle of the pulse width modulation valve.

In some embodiments, an agricultural machine comprises a chassis, a product tank containing a fluid, and a fluid distribution system in fluid communication with the product tank. The fluid distribution system comprises at least one fluid outlet line configured to deliver fluid to an agricultural field, a pulse width modulation valve in fluid communication with the at least one fluid outlet line, and a flow sensor configured to measure a flowrate of the fluid through the pulse width modulation valve. The agricultural machine further includes a sensor monitoring system configured to determine a corrected flowrate of the fluid through the pulse width modulation valve based on a measured flowrate of the fluid through the pulse width modulation valve and a correction factor based on a duty cycle of the pulse width modulation valve.

The agricultural machine may include a crop sprayer.

The agricultural machine may further include a boom comprising at least one boom arm configured to laterally extend from the chassis, the at least one fluid outlet line operably coupled to the at least one boom arm. The at least one boom arm may include a plurality of sprayer nozzle assemblies, each operably coupled to a pulse width modulation valve.

In some embodiments, each sprayer nozzle assembly comprises a flow sensor. The flow sensor may include an optical sensor configured to measure a frequency about which a projectile rotates within a housing of the sprayer nozzle assembly.

The sensor monitoring system may be configured to determine the correction factor based on a pressure of the fluid in the sprayer nozzle assembly and the duty cycle of the pulse width modulation valve.

In some embodiments, each sprayer nozzle assembly comprises a pressure sensor configured to measure a pressure of the fluid in the sprayer nozzle assembly.

In some embodiments, the agricultural machine comprises an agricultural implement comprising row units, at least one row unit in fluid communication with the fluid distribution system. The at least one row unit may include a conduit in fluid communication with the fluid distribution system and the pulse width modulation valve.

In some embodiments, a flow sensor is in fluid communication with the pulse width modulation valve and the conduit.

In some aspects, the fluid distribution system comprises a liquid distribution system.

In some embodiments, the sensor monitoring system is configured to determine the duty cycle of the pulse width modulation valve.

The sensor monitoring system may be configured to determine the duty cycle of the pulse width modulation valve based on at least one of a pressure of the fluid, an acceleration of the pulse width modulation valve, a magnetic field proximate the pulse width modulation valve, or a control signal provided to the pulse width modulation valve.

In some aspects, the sensor monitoring system is configured to determine the corrected flowrate using a mathematical equation correlating the measured flowrate to the corrected flowrate based on the duty cycle.

In some embodiments, the sensor monitoring system is configured to determine the corrected flowrate using a look-up table.

In some embodiments, a control system for an agricultural machine comprises at least one processor, and at least one non-transitory computer-readable storage medium storing instructions thereon that, when executed by the at least one processor, cause the control system to determine a duty cycle of a pulse width modulation valve of a fluid distribution system of the agricultural machine, measure a flowrate of fluid through a fluid outlet line of the fluid distribution system to determine a measured flowrate, and apply a correction factor to the measured flowrate to determine a corrected flowrate based on the duty cycle.

In some embodiments, the instructions cause the control system to measure the flowrate of the fluid using an optical sensor, measure a pressure of the fluid in the fluid outlet line, and determine the corrected flowrate based on the duty cycle and the pressure of the fluid.

**BRIEF DESCRIPTION OF THE DRAWINGS**

While the specification concludes with claims particularly pointing out and distinctly claiming what are regarded as embodiments of the present disclosure, various features and advantages may be more readily ascertained from the following description of example embodiments when read in conjunction with the accompanying drawings, in which:

FIG. 1 illustrates an agricultural vehicle in the form of a self-propelled crop sprayer;
FIG. 2 illustrates a portion of a spray boom of the crop sprayer shown in FIG. 1;
FIG. 3 is a simplified top view of another agricultural vehicle, in the form of a crop sprayer towed by a tractor;
FIG. 4A is a simplified perspective view of an agricultural implement;
FIG. 4B is a simplified cross-sectional view of a row unit of the agricultural implement of FIG. 4A;
FIG. 5A is a simplified perspective view of a nozzle assembly;
FIG. 5B is a simplified cross-sectional view of the nozzle assembly of FIG. 4A;
FIG. 5C is a simplified cross-sectional view of a sensor assembly of the nozzle assembly of FIG. 5A;
FIG. 5D is a simplified perspective view of the sensor assembly of FIG. 5C;
FIG. 5E is a simplified cross-sectional view of the sensor assembly of FIG. 5C;
FIG. 6 is a simplified flowchart of a method of determining a correction factor for correcting a measured flowrate of a nozzle assembly;
FIG. 7 is a simplified flow chart illustrating a method of determining a flowrate of a fluid through a nozzle assembly; and
FIG. 8 is a schematic of a computer-readable storage medium including processor-executable instructions configured to embody one or more of the methods of determining at least one flow condition within a flow channel of an agricultural machine.

**DETAILED DESCRIPTION**

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

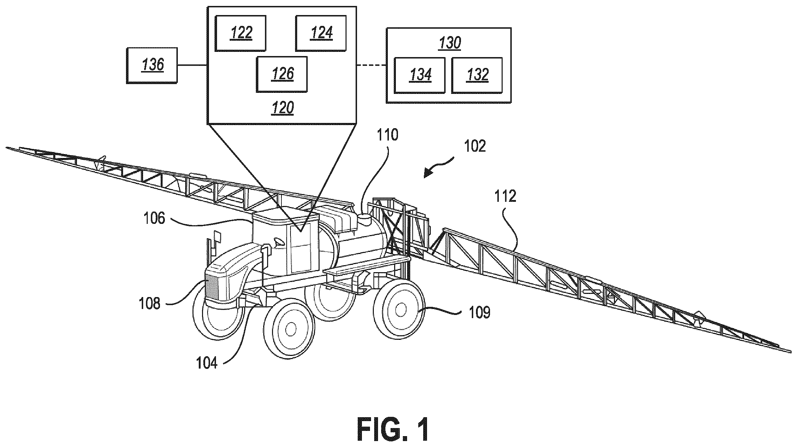

FIG. 1 shows an agricultural machine, such as a crop sprayer 102, used to deliver chemicals to agricultural crops in an agricultural field (also referred to herein as a "field"). As used herein, delivery of chemicals to an agricultural field may include delivering the chemicals to crops in the agricultural field. The crop sprayer 102 includes a chassis 104 supported by wheels 109 or a track. The crop sprayer 102 may include an operator cab 106 mounted on the chassis 104. The operator cab 106 may house controls for the crop sprayer 102. An engine 108 may be mounted on a forward portion of the chassis 104 in front of the operator cab 106 or may be mounted on a rearward portion of the chassis 104 behind the operator cab 106. The engine 108 may be commercially available from a variety of sources and may include, for example, a diesel engine or a gasoline-powered internal combustion engine, a battery-powered electric motor, etc. The engine 108 provides energy to propel the crop sprayer 102 through a field on wheels 109 or tracks, and may also provide energy to spray fluids (e.g., liquids, gases) from the crop sprayer 102.

The crop sprayer 102 further includes a product tank 110 to store a fluid (e.g., a liquid, a gas) to be sprayed on the field. The fluid may include chemicals, such as but not limited to, herbicides, pesticides, fungicides, and/or fertilizers. The product tank 110 may be mounted on the chassis 104, either in front of or behind the operator cab 106. The crop sprayer 102 may include more than one product tank 110 to store different chemicals to be sprayed on the field. The stored chemicals may be dispersed by the crop sprayer 102 one at a time, or different chemicals may be mixed and dispersed together in a variety of mixtures. The product tank 110 may be a liquid tank (generally at atmospheric pressure) or a pressurized gas tank.

A boom 112 on the crop sprayer 102 is used to distribute the fluid from the product tank 110 over a wide swath as the crop sprayer 102 is driven through the field. The boom 112 may include two or more portions that can fold for transport on public roadways, and unfold (i.e., to the position shown in FIG. 1) for field operations.

The crop sprayer 102 includes a control system 120 (also referred to as a "central controller," a "flow control system," or a "valve control system") configured to facilitate one or more control operations of the crop sprayer 102. For example, the control system 120 may be configured to control spray operations of the crop sprayer 102, such as an application rate of product to be applied to crops and/or a field. The control system 120 includes an input/output (I/O) device 122, a valve controller 124 (also referred to as a "nozzle controller," a "flowrate controller," or a "sprayer controller"), and a computing system 126, such as a processor. The control system 120 may include one or more additional controllers for operating the crop sprayer 102, such as a controller for steering of the crop sprayer 102, a controller for adjusting the height of the chassis 104, and/or other controllers.

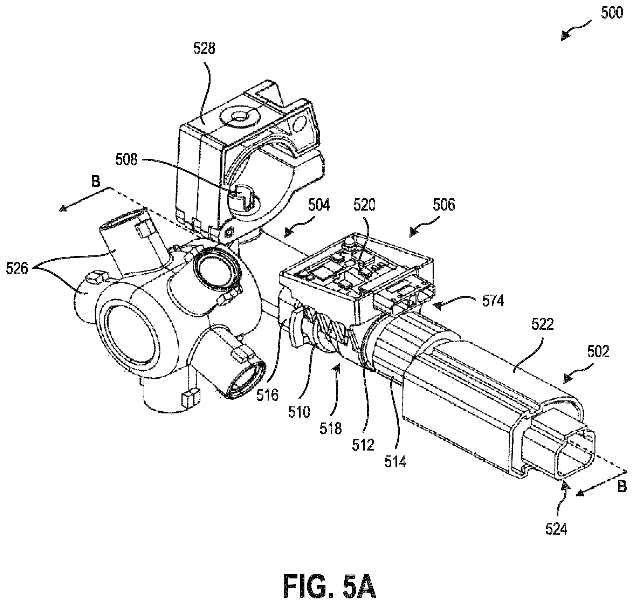

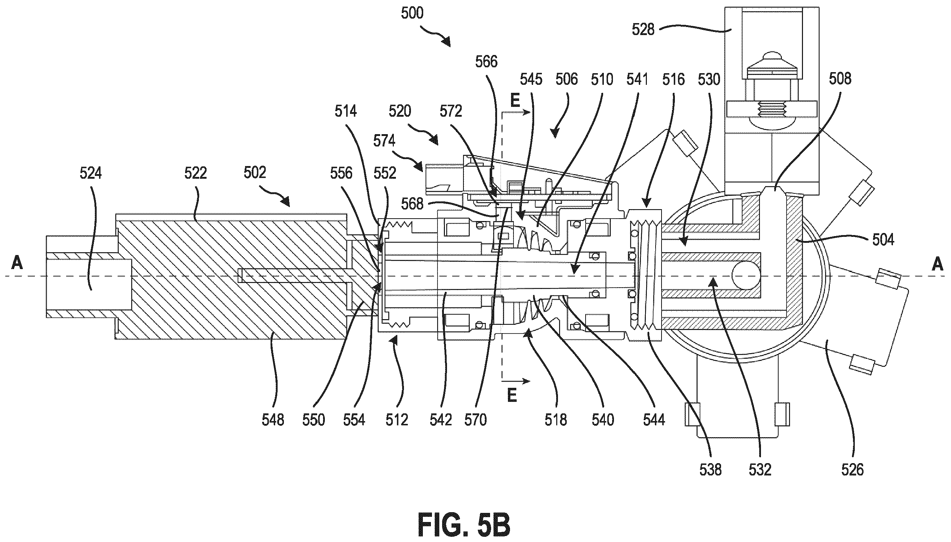

In addition, a sensor monitoring system 130 (also referred to as a "monitoring system 130," "a measurement system 130," or a "sensor management system 130") may be in operable communication with the control system 120. The sensor monitoring system 130 may include, for example, a computing system 132 and an I/O device 134. As described herein, the computing system 132 may be in operable communication with one or more sensor assemblies (e.g., sensor assemblies 506 (FIG. 5A through FIG. 5E)) of assemblies (e.g., nozzle assemblies 500 (FIG. 5A, FIG. 5B)) including one or more pulse width modulation valves to receive information indicative of at least one property (e.g., a flowrate) of the assemblies. In some embodiments, the sensor monitoring system 130 is in operable communication with the control system 120, such as by wireless or wired communication. In some embodiments, the sensor monitoring system 130 being separate from the control system 120 facilitates modification of an existing crop sprayer 102 including the control system 120 with the sensor monitoring system 130. In some embodiments, each of the control system 120 and the sensor monitoring system 130 is located in the operator cab 106. In some embodiments, the sensor monitoring system 130 comprises a different device (e.g., a computing device) than the control system 120.

The crop sprayer 102 may further include a global positioning system ("GPS") receiver 136 mounted to the crop sprayer 102 and operably connected to (e.g., in communication with) the control system 120. The GPS receiver 136 may provide GPS data to the control system 120, such as during traversal of the crop sprayer 102 in a forward direction and during application of product through nozzle assemblies to determine an application rate of the product.

Each of the I/O device 122 and the I/O device 134 may be configured to display information to an operator of the crop sprayer 102. For example, the I/O device 122 may include a user interface through which the operator activates steering control of the crop sprayer 102, control of the boom 112, or control of nozzle assemblies, as described in further detail herein. The I/O device 134 may be configured to display information related to the nozzle assemblies to the operator of the crop sprayer 102. Each of the I/O device 122 and the I/O device 134 may include a graphical user interface (GUI) configured to display one or more operating conditions of the respective crop sprayer 102, the nozzle assemblies, and/or the sensor assemblies to an operator of the crop sprayer 102.

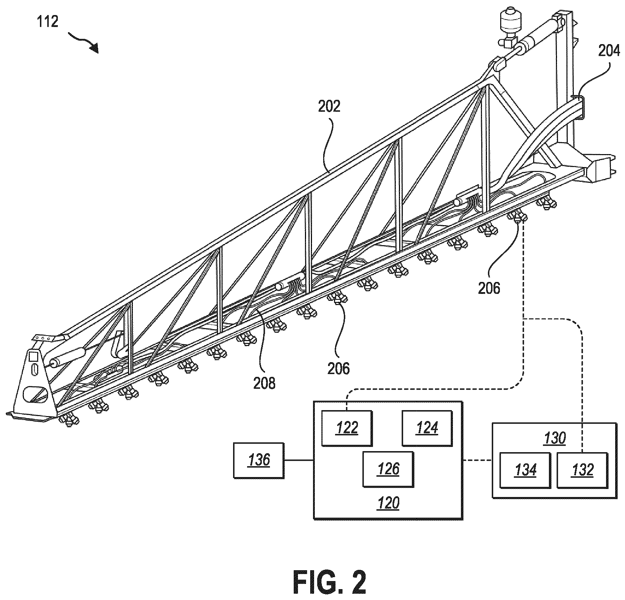

FIG. 2 is a simplified perspective view of a portion of a boom arm 202 of the boom 112. Fluid is conveyed from the product tank 110 (FIG. 1) by a fluid distribution system 204 to various fluid outlet lines 208, each in fluid communication with a nozzle assembly 206 spaced along the boom 112. The fluid distribution system 204, which may be mounted on the boom arm 202, includes at least one supply line and a recirculation line connected to the product tank 110 (FIG. 1). The nozzle assemblies 206 may be substantially similar to the spray nozzles described in U.S. Patent Application 2022/0264865, "Hydraulic Spray Nozzle," published August 25, 2022, or in International Patent Publication WO 2021/067739 A2, "Parameter Sensing for a Liquid Applicator," published April 8, 2021.

In FIG. 2, one of the nozzle assemblies 206 is shown in operable communication with each of the control system 120 and the sensor monitoring system 130. For example, the nozzle assembly 206 may be in operable communication with each of the computing system 126 of the control system 120 and the computing system 132 of the sensor monitoring system 130. In some embodiments, a sensor assembly (e.g., sensor assembly 506 (FIG. 5A through FIG. 5E)) of the nozzle assembly 206 is in operable communication with the sensor monitoring system 130 for communicating with sensors of the nozzle assembly; and a valve (e.g., valve 502 (FIG. 5A, FIG. 5B)) of the nozzle assembly 206 is in operable communication with the control system 120 for controlling one or more control operations of the nozzle assembly 206. While only one of the nozzle assemblies 206 is shown in operable communication with the control system 120 and the sensor monitoring system 130, it will be understood that each of the nozzle assemblies 206 may be in operable communication with the sensor monitoring system 130.

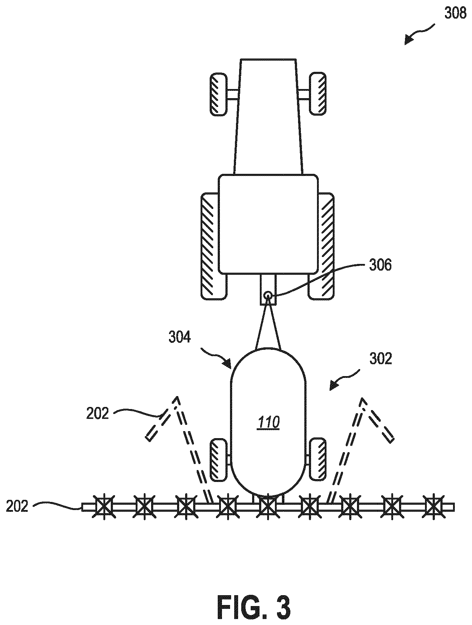

FIG. 3 shows another crop sprayer 302 that may be used to deliver chemicals to agricultural crops in a field. The crop sprayer 302 is a pull-type sprayer including a chassis 304 carrying a product tank 110. The crop sprayer 302 has a hitch 306 configured to couple the chassis 304 to a tractor 308. The tractor 308 may therefore pull the crop sprayer 302 through the field, and the operator of the tractor 308 may operate the crop sprayer 302 via a control system (similar to the control system 120 (FIG. 1, FIG. 2)) and receive measurements from the crop sprayer 302 via a sensor monitoring system (similar to the sensor monitoring system 130 (FIG. 1, FIG. 2)) in the cab of the tractor 308. The boom arms 202 may fold for road transport (indicated by dashed lines in FIG. 3). The crop sprayer 302 includes a fluid distribution system 204, as in FIG. 2 and described in further detail below.

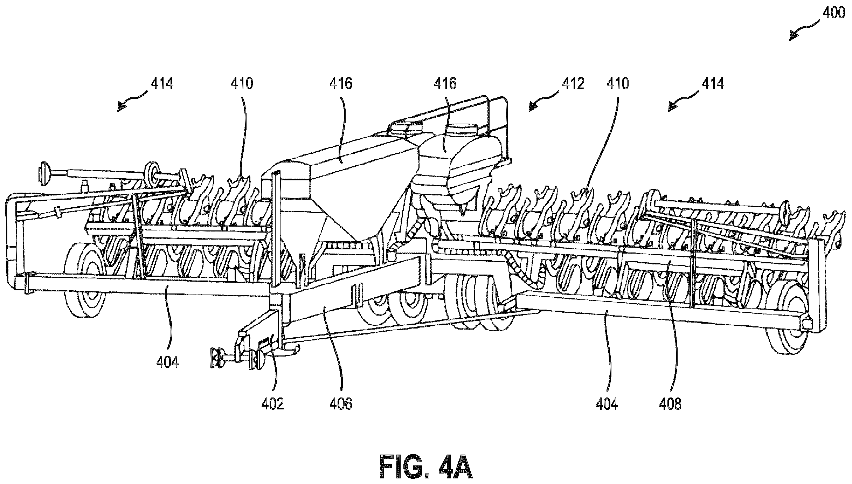

FIG. 4A shows an agricultural machine that may be used to deliver chemicals to agricultural crops in a field. The agricultural machine may include an agricultural implement 400 comprising a pull-type agricultural planter configured to be propelled (e.g., pulled) by a towing vehicle (e.g., a prime mover), such as a tractor (e.g., tractor 308 (FIG. 3)) via hitch 402. The agricultural implement 400 includes a frame 404 pivotably coupled to a toolbar 408. The frame 404 further includes a drawbar 406 extending from the hitch 402 towards the portion of the frame 404 extending parallel to the toolbar 408. The toolbar 408 may comprise a rigid support structure supporting row units 410. The row units 410 may be any type of ground-engaging device for fertilizing or otherwise working crops for soil, typically in rows. For example, the row units may be substantially similar to the row units described in International Patent Publication WO 2021/205245 A1, "Agricultural Implements Having Row Unit Position Sensors and at Least One Adjustable Wheel, and Related Control Systems and Methods," published October 14, 2021.

The toolbar 408 may be divided into three sections: a center portion 412 and two wing portions 414 connected to opposite lateral ends of the center portion 412. Each of the wing portions 414 may be pivotally attached to the center portion 412. In some embodiments, pivotal attachment of the wing portions 414 to the center portion 412 facilitates folding of the wing portions 414 to form a relatively narrower profile of the agricultural implement 400 for road transport and/or storage compared to when the wing portions 414 extend substantially collinearly from the center portion 412 as illustrated in FIG. 4A during, for example, application of fertilizer (e.g., liquid fertilizer, gaseous fertilizer). While FIG. 4A illustrates that the toolbar 408 includes three sections, the disclosure is not so limited. In other embodiments, the toolbar 408 may include a single section, two sections, five sections, or any other number of sections.

In some embodiments, the frame 404 (e.g., such as the portion of the frame 404 within the center portion 412) supports one or more product tanks 416. The product tanks 416 may be configured to carry, for example, fertilizer to be applied to the crops and/or field via the row units 410. In some embodiments, the frame 404 may carry one or more additional pieces of equipment, such as one or more product containers, control components, pumps, and reservoirs (e.g., fertilizer and/or pesticide reservoirs).

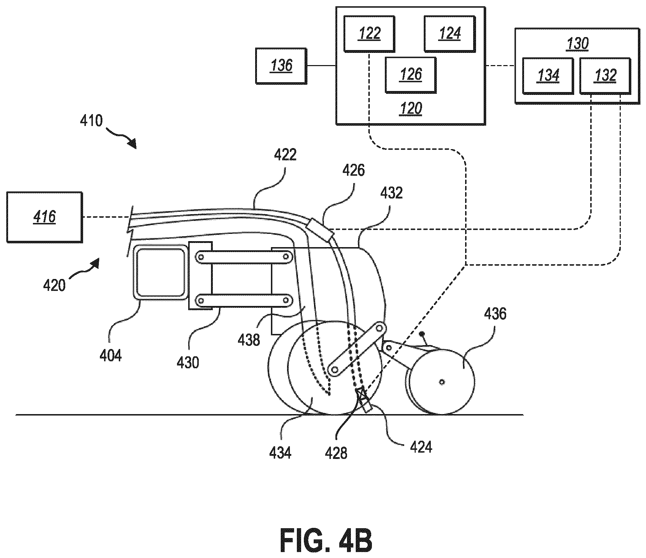

FIG. 4B shows a row unit 410 in fluid communication with a fluid distribution system 420. In some embodiments, the frame 404 and/or the toolbar 408 carry the fluid distribution system 420. The fluid distribution system 420 includes the product tank 416 and a first conduit 422 extending through the row unit 410 and including a fluid outlet line 424 for delivering fluid to the field and/or crops. The first conduit 422 may be in fluid communication with a flow sensor 426 configured to measure a flowrate of the fluid through the first conduit 422. The first conduit 422 may be in fluid communication with a pulse width modulation valve 428 that is in operable communication with at least one of the control system 120 or the sensor monitoring system 130. In some embodiments, the flow sensor 426 is in operable communication with the sensor monitoring system 130.

With continued reference to FIG. 4B, in some embodiments, each row unit 410 is attached to the frame 404 by a parallel linkage 430. The row units 410 may include a body 432 carrying the ground-engaging tools 434 (*e.g.*, opener discs, a shank, *etc.*) and the packing wheels 436. The row units 410 include a second conduit 438 for delivering particulate material (e.g., solid fertilizer, seeds) to the field and/or crops.

FIG. 5A is a simplified perspective view of an assembly including a pulse width modulation valve, such as a nozzle assembly 500 including a pulse width modulation valve. FIG. 5B is a simplified cross-sectional view of the nozzle assembly 500 taken through section line B-B of FIG. 5A. Each of the nozzle assemblies 206 (FIG. 2) may correspond to and be substantially the same as the nozzle assembly 500. In some embodiments, the nozzle assemblies 500 are substantially similar to the spray nozzles described in International Patent Publication WO 2021/067739 A2, "Parameter Sensing for a Liquid Applicator," published April 8, 2021. The nozzle assembly 500 includes a valve 502, a body 504, and a sensor assembly 506 between the valve 502 and the body 504. An inlet port 508 fluidly couples the nozzle assembly 500 to a fluid distribution system, such as the fluid distribution system 204 of the boom arm 202 or the fluid distribution system 420 of the agricultural implement 400. By way of non-limiting example, in some embodiments, the nozzle assembly 500 may be coupled to the fluid outlet lines 208, 424. The nozzle assembly 500 may include a clamp 528 configured to operably couple the body 504 to the fluid distribution system

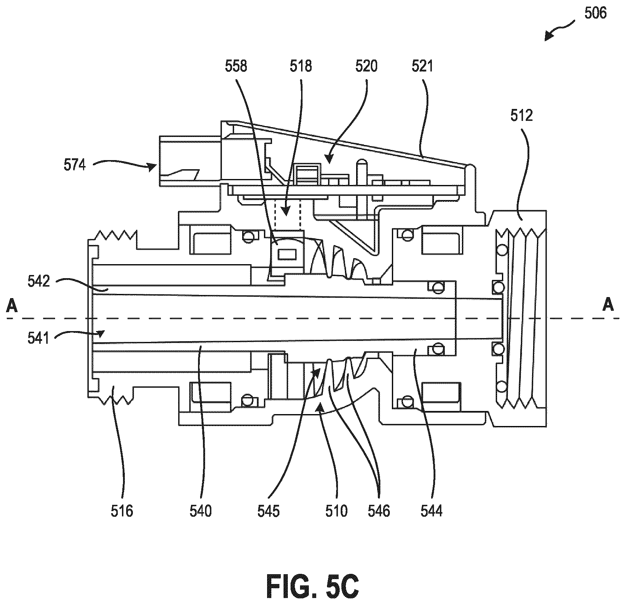

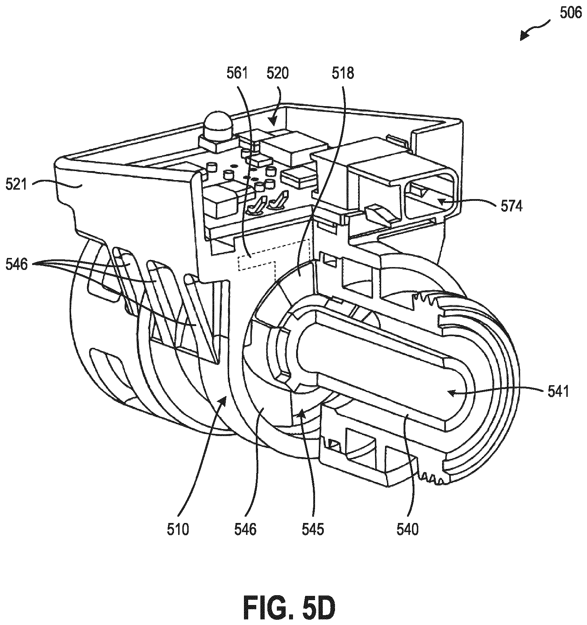

FIG. 5C is a simplified cross-sectional view of a portion of the sensor assembly 506 taken about section line B-B of FIG. 5A and showing an enlarged portion of the sensor assembly 506 relative to that illustrated in FIG. 5B. FIG. 5D is a simplified perspective cutaway view of the sensor assembly 506. Collectively referring to FIG. 5A through FIG. 5D, the sensor assembly 506 includes a sensor housing 510 including a first end 512 operably coupled to the valve 502 at a connector 514, and a second end 516 operably coupled to the body 504. The sensor assembly 506 includes sensor circuitry 520 configured to sense (e.g., measure) one or more parameters of the nozzle assembly 500, such as at least one of a flowrate of the fluid through the nozzle assembly 500 or a pressure of the fluid through the nozzle assembly 500. For example, the sensor assembly 506 includes a flow sensor 518 configured to measure a flowrate of fluid through the nozzle assembly 500 (e.g., through the valve 502). The sensor circuitry 520 may be configured to provide the measured flowrate to the sensor monitoring system 130 (FIG. 1, FIG. 2, FIG. 4B), such as to the computing system 132 (FIG. 1, FIG. 2, FIG. 4B). The sensor assembly 506 (e.g., the sensor circuitry 520) may be in operable communication with the sensor monitoring system 130 via a wired connection through port 574. The sensor circuitry 520 is located within circuitry housing 521 (FIG. 5C, FIG. 5D).

Fluid is configured to enter the nozzle assembly 500 at the inlet port 508, travel through the sensor assembly 506 towards the valve 502, and travel from the valve 502 back through the sensor assembly 506 to the body 504 and to a turret 526, which may be operably coupled to a spray tip to deliver the fluid from the nozzle assembly 500. The spray tip includes an orifice configured to atomize the fluid to generate the fluid spray from the nozzle assembly 500. In some embodiments, the nozzle assembly 500 includes multiple turrets 526, each turret 526 and associated spray tip including an orifice of a different configuration (e.g., size, shape) to generate different spray patterns.

Referring to FIG. 5B, the body 504 is fluidly coupled to the inlet port 508 and includes a first flow path 530 configured to receive the fluid from the inlet port 508. After traveling through the sensor assembly 506 to the valve 502 and returning from the valve 502 back through the sensor assembly 506, the fluid travels out of the body 504 via a second flow path 532. The second flow path 532 is configured to be in fluid communication with a desired one of the turrets 526. At least a portion of the first flow path 530 may be coaxial with the second flow path 532. In some embodiments, the first flow path 530 is disposed around the second flow path 532. During operation, only one of the turrets 526 is fluidly connected to an outlet path of the nozzle assembly 500 at a given time. The turret 526 may be selected based on the desired flowrate and/or spray pattern to be emitted from the nozzle assembly 500.

The sensor housing 510 may be operably coupled to the body 504 at a connector 538, which may comprise a threaded connection. The sensor assembly 506 includes a central member 540 defining a central passage 541 extending from an inlet end 542 and an outlet end 544. The outlet end 544 is in fluid communication with the second flow path 532 of the body 504. The sensor housing 510 defines a cavity therein defining a vortex flow path 545. The vortex flow path 545 is defined by inner walls 546 of the sensor housing 510 extending radially inward from the sensor housing 510 to the central member 540. The inner walls 546 may include, for example, splines.

The central member 540 may fluidly separate the vortex flow path 545 from the central passage 541. In some embodiments, upon entering the body 504, the fluid travels along the first flow path 530 to the sensor assembly 506 and into the vortex flow path 545 defined by the inner walls 546 of the sensor housing 510. Upon passing through the vortex flow path 445, the fluid passes by valve 502 and into the central passage 541 at the inlet end 542.

Referring to FIG. 5A and FIG. 5B, the valve 502 includes a valve body 522 coupled to the sensor assembly 506 at the second end 516. A port 524 is configured to receive a connector (e.g., an electrical connector) to provide power and/or communication to the valve 502. In some embodiments, the port 524 facilitates operable communication between the valve 502 and at least one of the control system 120 ((FIG. 1, FIG. 2, FIG. 4B) or the control system 130 (FIG. 1, FIG. 2, FIG.

4B), such as the valve controller 124 (FIG. 1, FIG. 2, FIG. 4B) the computing system 126 (FIG. 1, FIG. 2, FIG. 4B), the computing system 132 (FIG. 1, FIG. 2, FIG. 4B). In some embodiments, the valve 502 includes an actuator 548 (FIG. 5B) configured to drive reciprocation of a valve member 550 (FIG. 5B) within the valve body 522 responsive to instructions from the valve controller 124. In some embodiments, the port 524 is in operable communication with the control system 130, which receives instructions from the control system 120, such as from the valve controller 124.

The valve 502 includes the actuator 548 and the valve member 550. The actuator 548 is configured to drive reciprocation of the valve member 550 to open and close the valve 502. In some embodiments, the actuator 548 comprises a solenoid. Upon actuation, the solenoid causes the valve member 550 to open or close a flow pathway between a valve inlet 552 and a valve outlet 554. The actuator 548 may be configured to cause the valve member 550 to reciprocate along axis A-A (e.g., left and right in the view of FIG. 5B). The valve 502 may be controllable to vary the duty cycle and/or the frequency of reciprocation of the valve member 550 (also referred to as a "duty cycle frequency" or a "modulation frequency") to control one or more flow properties (e.g., the flowrate, the flow pattern) of the fluid from the nozzle assembly 500. For example, the valve 502 may be in operable communication with the valve controller 124 (FIG. 1, FIG. 2, FIG. 4B), to control the operation of the valve 502 to control the flowrate of the fluid through the nozzle assembly 500.

In some embodiments, the valve 502 comprises a pulse width modulation (PWM) valve. The valve 502 may be configured to generate turbulence in the fluid flow as the valve 502 pulses between an open state and a closed state. For example, the inner walls 546 and the central member 540 may form helical flow paths defining the vortex flow path 545. The vortex flow path 545 create a cyclonic flow effect that induces rotation of a projectile 558 about the axis A-A.

A seat 556 is positioned between the valve member 550 and the sensor assembly 506. When the valve 502 is in the open position, the actuator 548 may be retracted and the valve member 550 may not contact the seat 556 such that the flow path between the valve inlet 552 and the valve outlet 554 is open. When the valve 502 is in the closed position, the actuator 548 causes the valve member 550 to contact the seat 556 and close the flow path between the valve inlet 552 and the valve outlet 554.

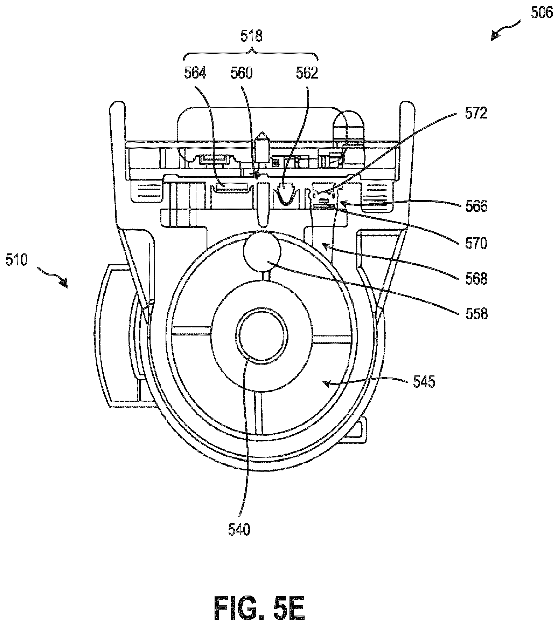

FIG. 5E is a simplified cross-sectional view of the sensor assembly 506 taken through section line E-E of FIG. 5B. With reference to FIG. 5E, a projectile 558 may be disposed within the sensor housing 510 within a portion of the vortex flow path 545. Responsive to exposure to fluid flow, the projectile 558 rotates within the vortex flow path 545 about the central member 540 (e.g., between the central member 540 and inner surfaces of outer walls of the sensor housing 510). The speed at which the projectile 558 rotates within the vortex flow path 545 is dependent on the flowrate of fluid through the sensor housing 510. The flow sensor 518 is configured to measure a flowrate of fluid within the sensor assembly 506 based on rotation of the projectile 558 about axis A-A (FIG. 5B) (e.g., about the central member 540). Though pictured as spherical, the projectile 558 may be any selected shape or design, such as described in U.S. Patent Application Publication 2023/0025158, "Spray Flow Sensing with Optical Signature Analysis," published July 12, 2023; or U.S. Provisional Patent Application 63/500,536, "Projectiles for Optical Flow Sensing, and Related Sensors and Methods," filed May 5, 2023.

The flow sensor 518 includes an optical sensor 560 configured to sense rotation of the projectile 558. For example, the optical sensor 560 may be configured to measure a frequency at which the projectile 558 rotates about the central member 540 within the vortex flow path 545. The optical sensor 560 may include an emitter 562 configured to emit electromagnetic radiation (e.g., light) towards the projectile 558 (e.g., through an optical sensor window 561 (FIG. 5D)), and an optical receiver (an optical sensor) 564 configured to measure the electromagnetic radiation (e.g., light) reflected from the projectile 558. The emitter 562 may comprise a light-emitting diode (LED) and the optical receiver 564 may comprise a photodiode. The emitter 562 may emit electromagnetic radiation into the flow path of the projectile 558 and the optical receiver 564 may sense the reflected electromagnetic radiation.

As the projectile 558 passes the optical emitter 562, the light from the optical emitter 562 is reflected by the projectile 558 and is sensed by the optical receiver 564. The optical receiver 564 may generate an output signal to the sensor circuitry 520 indicating passes of the projectile 558. Flow data, such as a frequency at which the projectile 558 passes the optical sensor 560 (e.g., a pass count of the projectile 558), is generated and the flowrate can be determined based on the frequency. In some embodiments, the optical sensor 560 includes a proximity sensor. In some embodiments, the flow sensor 518 can include a magnetic projectile 558 a proximity sensor, such as a Hall-effect sensor, to sense passes of the ball.

In addition to sensing the flowrate of fluid through the sensor assembly 506, the sensor assembly 506 may be configured to measure a pressure of the liquid in the valve 502, such as by measuring the pressure of the fluid in the sensor assembly 506. In some embodiments, the sensor assembly 506 includes a pressure sensor 566 configured to measure a pressure of the fluid within the sensor assembly 506. As best seen in FIG. 5E, the pressure sensor 566 may include a pressure port 568 at which a diaphragm 570 is located. The diaphragm 570 may be exposed to the fluid in the sensor assembly 506, such as the fluid within the vortex flow path 545. The pressure sensor 566 includes a sensor component 572, which may include a piezoresistive or a piezoelectric component. Interaction of the diaphragm 570 on the sensor component 572 may be indicative of and correspond to a pressure of the pressure in the sensor assembly 506. In some embodiments, the pressure sensor 566 is in operable communication with the sensor monitoring system 130 (FIG. 1, FIG. 2, FIG. 4B). Although the nozzle assembly 500 has been described and illustrated as including a particular type of pressure sensor 566, in other embodiments, the pressure sensor 566 comprises a different type of pressure sensor and/or is located at a different region of the nozzle assembly 500.

The valve 502 may be configured to reciprocate between an open state and a closed state according to a desired modulation frequency and duty cycle to control fluid flow through the outlet of the nozzle assembly 500 (e.g., a nozzle operably coupled to the turret 526). The duty cycle of the valve 502 is controlled to control the flowrate of the fluid through the nozzle assembly 500. Pulsing the valve 502 between open and closed positions affects the flowrate. In some embodiments, pulsing the valve 502 maintains the integrity and quality of the spray pattern generated by the nozzle assembly 500 across a range of flowrates.

While the nozzle assembly 500 has been described and illustrated as having a particular configuration and orientation, the disclosure is not so limited. In other embodiments, the nozzle assembly 500 may be substantially similar to other spray nozzles (e.g., applicators 18') described in International Patent Publication WO 2021/067739 A2, or to the nozzles described in U.S. Patent Application Publication 2022/0264865.

The port 574 of the sensor assembly 506 is configured to receive a connector (e.g., an electrical connector) to provide power and/or communication to the sensor assembly 506, such as from the sensor monitoring system 130 (FIG. 1, FIG. 2, FIG. 4B). The port 574 may facilitate electrical communication between the sensor assembly 506 (e.g., between each of the flow sensor 518 and the pressure sensor 566) and the sensor monitoring system 130.

In use and operation, responsive to opening and closing of the valve 502, such as by actuation of the actuator 548 to cause the valve member 550 to reciprocate, fluid may flow from the inlet port 508, through the first flow path 530 of the body 504 to the sensor housing 510; through the vortex flow path 545 defined in the sensor housing 510 to the valve inlet 552; from the valve inlet 552 through the valve 502 to the valve outlet 554; from the valve outlet 554, through the central passage 541 of the central member 540 of the sensor housing 510 to the second flow path 532 of the body 504; and from the second flow path 532 out one of the turrets 526 and associated spray tips. As the fluid passes through the second housing 510, one or more flow properties of the fluid may be measured by the sensor assembly 506, such as the flowrate of the fluid through the sensor housing 510 or the pressure of the fluid in the sensor housing 510.

As described above, the sensor assembly 506 may be in operable communication with the sensor monitoring system 130 (FIG. 1, FIG. 2, FIG. 4B) (e.g., via the port 574), and the valve 502 may be in operable communication with the valve controller 124 (FIG. 1, FIG. 2, FIG. 4B) (e.g., via the port 524). The sensor assembly 506 may be configured to measure the one or more properties of the fluid (e.g., the flowrate, the pressure) within the sensor housing 510 and the sensor monitoring system 130 may be configured to receive the signals from the sensor assembly 506. In some embodiments, the control system 120, such as the valve controller 124, may be configured to provide operating instructions to the fluid distribution system 204, 420 (FIG. 2, FIG. 4B). The instructions may include at least one of a desired flowrate of fluid to be provided to the nozzle assemblies 500, or operating instructions for a pump or valve associated with the fluid distribution system 204, 420 to adjust the flowrate of the fluid provided to the nozzle assemblies 500. In some embodiments, the instructions are provided from an operator of the crop sprayer 102 or the agricultural implement 400, such as via the I/O device 122 of the control system 120. In some embodiments, the sensor monitoring system 130 provides an indication of the flowrate of fluid through each of the nozzle assemblies 500 to the I/O device 134 (e.g., to a graphical user interface (GUI) of the I/O device 134) and the operator of the crop sprayer 102 or agricultural implement 400 may provide instructions to the valve controller 124 via the I/O device 122 of the control system 120 to adjust a flowrate of the fluid from the product tank 110, 416 (FIG. 1, FIG. 4B) to the fluid distribution systems 204, 420. In some embodiments, the valve 502 receives, from the valve controller 124, instructions indicative of a desired flowrate through the nozzle assembly 500. Responsive to receiving the instructions, the valve 502 adjusts the flowrate to provide the desired flowrate through the nozzle assembly 500. Based on a desired flowrate, the valve controller 124 provides operating instructions to the valve 502 to open and close at a particular duty cycle and modulation frequency.

Although the valve 502 has been described and illustrated as being associated with the nozzle assembly 500 for use in a crop sprayer 102, 300 (e.g., the sprayer nozzle assembly) or the agricultural implement 400 for use with the row units 410, the disclosure is not so limited. In some embodiments, the nozzle assembly 500 and/or the valve 502 are configured to provide flow of a gaseous material (e.g., ammonia) therethrough.

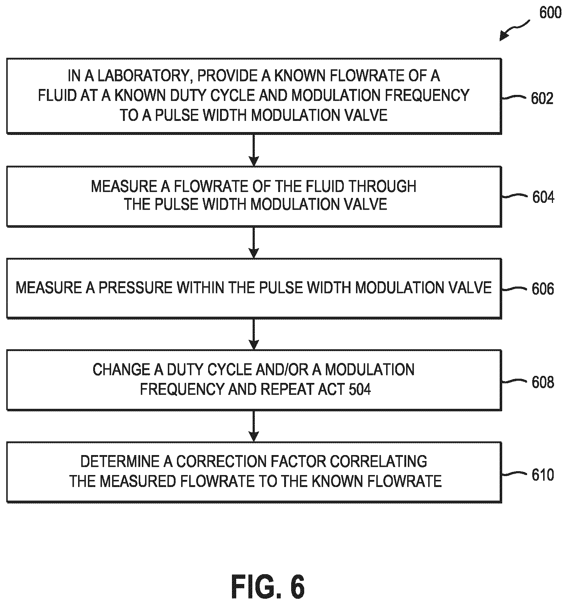

FIG. 6 is a simplified flow chart illustrating a method 600 of determining a correction factor for correcting a measured flowrate through a pulse width modulation valve. The method 600 includes, in a laboratory (or another location before installation a machine), providing a known flowrate of a fluid (e.g., a liquid, a gas) at a known duty cycle and modulation frequency to pulse width modulation valve, as shown in act 602. The pulse width modulation valve may be associated with a nozzle assembly, such as the nozzle assembly 500 described with reference to FIG. 5A through FIG. 5E. However, the pulse width modulation valve may be associated with a different type of nozzle assembly other than a sprayer nozzle assembly or may not be associated with a nozzle assembly. The known flowrate may be a flowrate that is within a range that would be expected during application of a product to a crop and/or field. For example, the flowrate may be within a range of from about 0.1 gallons per minute (gpm) to about 5.0 gpm. However, the disclosure is not so limited, and the flowrate may be different than that described.

The method 600 further includes measuring a flowrate of the fluid through the pulse width modulation valve, as shown in act 604. The flowrate may be measured as described above with reference to the nozzle assembly 500. For example, the flowrate may be measured by measuring the frequency at which the projectile rotates within the sensor housing, such as around the central member of the sensor housing within the projectile flow path. The frequency may be measured with an optical sensor including an emitter and a receiver, as described above. However, the disclosure is not so limited and the flowrate may be measured by other means, such as with another type of flowmeter.

The method 600 may further include measuring a pressure (e.g., of the fluid) within the pulse width modulation valve (or within a body in fluid communication with the pulse width modulation valve), as shown in act 606. The pressure within the pulse width modulation valve may be measured as described above with reference to the pressure sensor 566. In other embodiments, the fluid may be provided to the nozzle assembly at a known pressure. As used herein, a pressure of the fluid in the pulse width modulation valve includes a pressure of the fluid in a body (e.g., a nozzle assembly, a housing (e.g., sensor housing 510 (FIG. 5B))) in fluid communication with the pulse width modulation valve.

Responsive to measuring the flowrate and the pressure of the fluid, the method 600 further includes changing the duty cycle and/or modulation frequency of the pulse width modulation valve and repeating act 604, as shown in act 608. Changing the duty cycle of the pulse width modulation valve includes changing the duty cycle of the pulse width modulation valve (e.g., valve 502) from a first duty cycle (e.g., the known duty cycle of act 602) to a second duty cycle, such as by reciprocating a valve member between an open and a closed position. Changing the duty cycle of the pulse width modulation valve may change the flowrate through the pulse width modulation valve. At the second duty cycle, the flowrate of the fluid through the pulse width modulation valve may be measured, as described in act 604. Changing the modulation frequency of the pulse width modulation valve may include changing the frequency at which a control signal is provided to the pulse width modulation valve. In some embodiments, changing the modulation frequency changes the duty cycle. In other embodiments, the modulation frequency is changed without substantially changing the duty cycle, such as by changing the duration of the control signal at each pulse).

In some embodiments, act 608 includes measuring the flowrate through the pulse width modulation valve at a plurality of duty cycles and a plurality of modulation frequencies at each of a plurality of pressures. For example, act 608 may include changing the duty cycle and measuring the flowrate of the fluid through the pulse width modulation valve at a constant pressure; changing the modulation frequency and measuring the flowrate at the constant pressure; changing the pressure to a different pressure and measuring the flowrate of the fluid through the pulse width modulation valve at a plurality of duty cycles and a plurality of modulation frequencies; and repeating the process of changing the pressure and measuring the flowrate of the fluid at the plurality of duty cycles and modulation frequencies. Accordingly, the flowrate of the fluid through the pulse width modulation valve may be measured at a plurality of duty cycles, modulation frequencies, and pressures.

Responsive to measuring the flowrate of the fluid through the pulse width modulation valve at the plurality of duty cycles, modulation frequencies, and pressures, the method 600 includes determining a correction factor correlating the measured flowrate to the known flowrate, as shown in act 610. The correction factor may correlate the known flowrate to the measured flowrate based on at least one of the duty cycle of the pulse width modulation valve, the modulation frequency of the pulse width modulation valve, and the pressure of the fluid. In some embodiments, the correction factor correlates the known flowrate to the measured flowrate based on the duty cycle (e.g., based entirely on the duty cycle, based, at least in part, on the duty cycle). In some embodiments, the known flowrate is correlated to the measured flowrate according to Equation (1) below, wherein the known flowrate is the known flowrate of the fluid in act 602, the measured flowrate is the flowrate of the fluid measured in act 604, and f is the correction factor and is based, at least in part, on the duty cycle, as described below.

$$Known\ Flowrate = f \times Measured\ Flowrate; \quad (1).$$

The correction factor may be based on at least one of the duty cycle, the modulation frequency, or the pressure of the fluid in the pulse width modulation valve. The correction factor may include a mathematical equation based on the at least one of the duty cycle, the modulation frequency, or the pressure or a look-up table including the value of the correction factor for different duty cycles and different pressures. In some embodiments, the correction factor may further be based on an orifice size and/or nozzle configuration.

In some embodiments, the correction factor is determined using a machine learning model based on the known flowrates, the known duty cycles, the measured flowrates, and optionally, the pressures and known modulation frequencies to determine a correlation between the known flowrate (e.g., a corrected flowrate) and the measured flowrate based on at least one of the pressure, the duty cycle, or the modulation frequency. For example, the data determined during acts 602 through 608 may be used as training data to train a machine learning model to generate an algorithm to calculate the correction factor based on the measured flowrate, the duty cycle, and optionally, the pressure and modulation frequency. Accordingly, the algorithm may be configured to determine the correction factor to be applied to the measured flowrate to correct the measured flowrate and determine a corrected flowrate (e.g., an actual flowrate) based on the measured flowrate. The algorithm may be used to determine the correction factor as a function of at least one of (e.g., each of) the duty cycle, the modulation frequency, the pressure, or the measured flowrate. In some embodiments, the algorithm is configured to determine the correction factor as a function of (e.g., based on) the duty cycle. Accordingly, the measured flowrate may be corrected by multiplying the measured flowrate by the correction factor, which may be based on the duty factor. The correction factor may further be based on the pressure of the fluid in the pulse width modulation valve.

In some embodiments, the method 600 includes correlating the duty factor and/or the modulation frequency to the pressure of the fluid. For example, in some embodiments, a machine learning model is trained using the plurality of duty cycles, modulation frequencies, and the plurality of pressures to determine a correlation between the pressure and each of the duty cycle and modulation frequency. By way of non-limiting example, the pressure of the fluid in the sensor assembly may exhibit pulses corresponding to the square wave of the duty cycle (e.g., the sensor assembly may exhibit pulses in pressure corresponding to the square wave of the duty cycle). A frequency of the pressure pulses may correlate to the modulation frequency.

In some embodiments, the method 600 may be performed for different nozzle types and configurations including different nozzle shapes and orifice sizes to characterize the relationship between the correction factor and the duty cycle and modulation frequency for each of a plurality of different nozzle types and configurations.

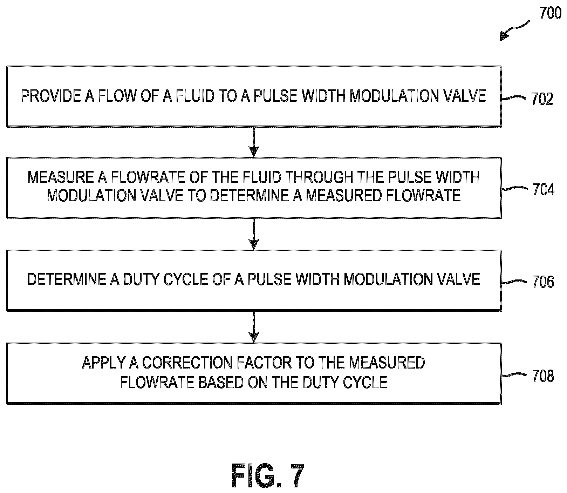

FIG. 7 is a simplified flow chart illustrating a method 700 of determining a flowrate of a fluid through a pulse width modulation valve. The pulse width modulation valve may include a pulse width modulation valve used in any system or assembly. In some embodiments, the pulse width modulation valve is associated with a nozzle assembly, such as the nozzle assembly 500 for use in the liquid distribution systems 204, 420. The method 700 includes providing a flow of a fluid to a pulse width modulation valve, as shown in act 702. Responsive to providing the flow of the fluid to the pulse width modulation valve, the method 700 includes measuring a flowrate of the fluid through the pulse width modulation valve, as shown in act 604. The flowrate of the fluid through the pulse width modulation valve may be measured as described above with reference to act 604.

Responsive to measuring the flowrate of the fluid through the pulse width modulation valve, the method 700 includes determining a duty cycle of the pulse width modulation valve, as shown in act 706. The duty cycle of the pulse width modulation valve may be determined based on at least one of a flow control signal provided to the actuator (e.g., actuator 548) of the pulse width modulation valve of the nozzle assembly by a control system (e.g., sensor monitoring system 130 (FIG. 1, FIG. 2, FIG. 4B), such as a computing system 132 (FIG. 1, FIG. 2, FIG. 4B)), a pressure of the fluid in the pulse width modulation valve (e.g., a change in the pressure of the fluid in the pulse width modulation valve), an acceleration (e.g., vibrations) of the actuator (e.g., measured by an accelerometer), a magnetic property (e.g., a magnetic field) of the actuator (e.g., measured by a magnetometer), or by another method. In some embodiments, the duty cycle and modulation frequency of the pulse width modulation valve is determined based on the pressure of the fluid.

Responsive to determining the duty cycle, the method 700 includes applying a correction factor to the measured flowrate based on the duty cycle, as shown in act 708. The correction factor may be based on the duty cycle and may be determined as described above with reference to the method 600. In some embodiments, the correction factor is determined based on the duty cycle and the pressure of the fluid in the pulse width modulation valve.

The correction factor may be determined using a mathematical equation and may be based on the duty cycle, as described above with reference to the method 600 of FIG. 6. In some embodiments, the mathematical equation is based on the duty cycle and at least one of the pressure of the liquid in the pulse width modulation valve or the modulation frequency. In other embodiments, the correction factor is stored in a memory of the control system and is based on the duty cycle and, optically, the pressure of the fluid in the nozzle assembly and/or the modulation frequency, as described with reference to the method 600 of FIG. 6.

Correcting the measured flowrate with the correction factor facilitates a more accurate determination of the flowrate of the fluid through the pulse width modulation valve (e.g., through the valve 502 of the nozzle assembly 500). For example, when the flowrate is measured based only on the frequency of rotation of the projectile 558 about the central member 540 of the sensor housing 510 within the vortex flow path 545, the projectile 558 may continue to rotate about the central member 540 (FIG. 5B) for a period, even after the flow of the fluid through the nozzle assembly 500 has stopped, even when the density of the projectile 558 is the same as or substantially the same as the density of the fluid. Applying the correction factor to the measured flowrate facilitates improved accuracy of the determined flowrate and improved control of the fluid distributed to the crops and/or the field by the nozzle assembly 500.

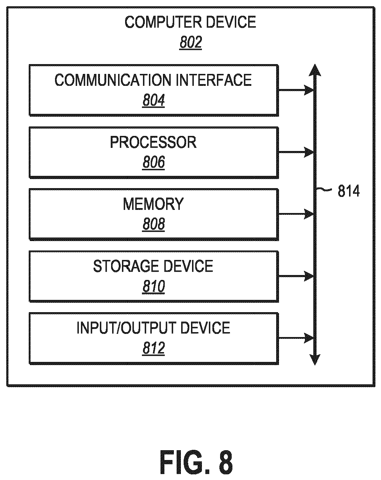

FIG. 8 is a schematic view of a computer device 802. In some embodiments, each of the control system 120 (FIG. 1, FIG. 2, FIG. 4B) and the sensor monitoring system 130 includes a computer device such as the computer device 802 of FIG. 8. The computer device 802 may include a communication interface 804, at least one processor 806, a memory 808, a storage device 810, an input/output device 812, and a bus 814. The computer device 802 may be used to implement various functions, operations, acts, processes, and/or methods disclosed herein, such as the method 600 or method 700.

The communication interface 804 may include hardware, software, or both. The communication interface 804 may provide one or more interfaces for communication (such as, for example, packet-based communication) between the computer device 802 and one or more other computing devices or networks (e.g., a server). As an example, and not by way of limitation, the communication interface 804 may include a network interface controller (NIC) or network adapter for communicating with an Ethernet or other wire-based network or a wireless NIC (WNIC) or wireless adapter for communicating with a wireless network, such as a Wi-Fi.

The at least one processor 806 may include hardware for executing instructions, such as those making up a computer program. By way of non-limiting example, to execute instructions, the at least one processor 806 may retrieve (or fetch) the instructions from an internal register, an internal cache, the memory 808, or the storage device 810 and decode and execute them to execute instructions. In some embodiments, the at least one processor 806 includes one or more internal caches for data, instructions, or addresses. The at least one processor 806 may include one or more instruction caches, one or more data caches, and one or more translation look aside buffers (TLBs). Instructions in the instruction caches may be copies of instructions in the memory 808 or the storage device 810.

The memory 808 may be coupled to the at least one processor 806. The memory 808 may be used for storing data, metadata, and programs for execution by the processor(s). The memory 808 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 808 may be internal or distributed memory.

The storage device 810 may include storage for storing data or instructions. As an example, and not by way of limitation, storage device 810 may include a non-transitory storage medium described above. The storage device 810 may include a hard disk drive (HDD), Flash memory, an optical disc, a magneto-optical disc, magnetic tape, or a Universal Serial Bus (USB) drive or a combination of two or more of these. The storage device 810 may include removable or non-removable (or fixed) media, where appropriate. The storage device 810 may be internal or external to the storage device 810. In one or more embodiments, the storage device 810 is non-volatile, solid-state memory. In other embodiments, the storage device 810 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 810 may include machine-executable code stored thereon. The storage device 810 may include, for example, a non-transitory computer-readable storage medium. The machine-executable code includes information describing functional elements that may be implemented by (e.g., performed by) the at least one processor 806. The at least one processor 806 is adapted to implement (e.g., perform) the functional elements described by the machine-executable code. In some embodiments the at least one processor 806 may be configured to perform the functional elements described by the machine-executable code sequentially, concurrently (e.g., on one or more different hardware platforms), or in one or more parallel process streams.

When implemented by the at least one processor 806, the machine-executable code is configured to adapt the at least one processor 806 to perform operations of embodiments disclosed herein. For example, the machine-executable code may be configured to adapt the at least one processor 806 to perform at least a portion or a totality of the method 600 of FIG. 6 or the method 700 of FIG. 7. As another example, the machine-executable code may be configured to adapt the at least one processor 806 to perform at least a portion or a totality of the operations discussed for the crop sprayer 102 of FIG. 1, the nozzle assembly 206 of FIG. 2, the crop sprayer 302 of FIG. 3, or the agricultural implement 400 of FIG. 4B. As a specific, non-limiting example, the machine-executable code may be configured to adapt the at least one processor 806 to cause the sensor monitoring system 130 of the crop sprayer 102, 302 or agricultural implement 400 to determine a duty cycle of pulse width modulation valves of nozzle assemblies thereof, a flowrate of a fluid through the nozzle assemblies, and apply a correction factor to the flowrates to determine a corrected flowrate. In another non-limiting example, the machine-executable code may be configured to adapt the at least one processor 806 to determine a correction factor for a nozzle assembly correlating a measured flowrate to a corrected flowrate based on at least one of duty cycle or pressure.

The input/output device 812 may correspond to the input/output device 122 and/or the input/output device 134 of FIG. 1, FIG. 2, and FIG. 4B and may allow an operator of the crop sprayer 102, 302 or agricultural implement 400 to provide input to, and receive output from, the computer device 802. The input/output device 812 may include a mouse, a keypad or a keyboard, a joystick, a touch screen, a camera, an optical scanner, network interface, modem, other known I/O devices, or a combination of such I/O interfaces.

In some embodiments, the bus 814 (*e.g.,* a Controller Area Network (CAN) bus, an ISOBUS (ISO 11783 Compliant Implement Control)) may include hardware, software, or both that couples components of computer device 802 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors.

Further, embodiments of the disclosure have utility with different and various machine types and configurations.

**Claims**

1. A method of measuring a flowrate though a pulse width modulation valve, the method comprising:

   determining a duty cycle of the pulse width modulation valve;
   measuring a flowrate of a fluid through the pulse width modulation valve to determine a measured flowrate; and
   applying a correction factor to the measured flowrate to determine a corrected flowrate based on the duty cycle.

2. The method of claim 1, wherein measuring a flowrate of a fluid through the pulse width modulation valve comprises measuring a flowrate of a liquid through the pulse width modulation valve.

3. The method of claim 1 or claim 2, wherein determining a duty cycle of the pulse width modulation valve comprises determining the duty cycle of the pulse width modulation valve based on at least one of a change in pressure of the fluid, an acceleration of an actuator of the pulse width modulation valve, a magnetic field proximate to the pulse width modulation valve, or a control signal provided to the pulse width modulation valve.

4. The method of any one of claims 1 through 3, further comprising determining the correction factor as a function of the duty cycle of the pulse width modulation valve.

5. The method of claim 4, wherein determining the correction factor as a function of the duty cycle of the pulse width modulation valve comprises measuring a flowrate at a plurality of pressures and a plurality of duty cycles through another pulse width modulation valve that is substantially the same as the pulse width modulation valve.

6. The method of any one of claims 1 through 5, further comprising measuring a pressure of the fluid; optionally wherein applying a correction factor to the measured flowrate to determine a corrected flowrate based on the duty cycle comprises applying a correction factor to the measured flowrate to determine a corrected flowrate based on the duty cycle and the pressure of the fluid.

7. The method of any one of claims 1 through 6, wherein applying a correction factor to the measured flowrate to determine a corrected flowrate based on the duty cycle comprises applying a correction factor comprising a mathematical equation based on at least the duty cycle.

8. The method of any one of claims 1 through 7, wherein applying a correction factor to the measured flowrate to determine a corrected flowrate based on the duty cycle comprises determining the correction factor with a look-up table based on at least the duty cycle.

9. An agricultural machine, comprising:

   a chassis;
   a product tank containing a fluid;
   a fluid distribution system in fluid communication with the product tank, the fluid distribution system comprising:

      at least one fluid outlet line configured to deliver the fluid to an agricultural field;
      a pulse width modulation valve in fluid communication with the at least one fluid outlet line; and
      a flow sensor configured to measure a flowrate of the fluid through the pulse width modulation valve; and

   a sensor monitoring system configured to determine a corrected flowrate of the fluid through the pulse width modulation valve based on a measured flowrate of the fluid through the pulse width modulation valve and a correction factor based on a duty cycle of the pulse width modulation valve.

10. The agricultural machine of claim 9, further comprising a boom comprising at least one boom arm configured to laterally extend from the chassis, the at least one fluid outlet line operably coupled to the at least one boom arm; wherein the at least one boom arm comprises a plurality of sprayer nozzle assemblies, each operably coupled to a pulse width modulation valve.

**11.** The agricultural machine of claim 10, wherein each sprayer nozzle assembly comprises a flow sensor.

**12.** The agricultural machine of claim 11, wherein the flow sensor comprises an optical sensor configured to measure a frequency about which a projectile rotates within a housing of the sprayer nozzle assembly.

**13.** The agricultural machine of any one of claims 10 through 12, wherein the sensor monitoring system is configured determine the correction factor based on a pressure of the fluid in the sprayer nozzle assembly and the duty cycle of the pulse width modulation valve.

**14.** The agricultural machine of any one of claims 10 through 18, wherein each sprayer nozzle assembly comprises a pressure sensor configured to measure a pressure of the fluid in the sprayer nozzle assembly.

**15.** The agricultural machine of any one of claims 9 through 14, wherein the sensor monitoring system is configured to determine the duty cycle of the pulse width modulation valve.

FIG. 1

**FIG. 2**

**FIG. 3**

FIG. 4A

FIG. 4B

500

528

508

B

526

504 520 506

574

522

516 502

510 518 512 514

524

**FIG. 5A**

FIG. 5B

**FIG. 5C**

FIG. 5D

**FIG. 5E**

FIG. 6

700

PROVIDE A FLOW OF A FLUID TO A PULSE WIDTH MODULATION VALVE — 702

MEASURE A FLOWRATE OF THE FLUID THROUGH THE PULSE WIDTH MODULATION VALVE TO DETERMINE A MEASURED FLOWRATE — 704

DETERMINE A DUTY CYCLE OF A PULSE WIDTH MODULATION VALVE — 706

APPLY A CORRECTION FACTOR TO THE MEASURED FLOWRATE BASED ON THE DUTY CYCLE — 708

## FIG. 7

**FIG. 8**

Europäisches
Patentamt

European
Patent Office

Office européen
des brevets

## EUROPEAN SEARCH REPORT

**Application Number**

EP 25 17 6545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/099288 A1 (MAURER GARRETT [US] ET AL) 28 March 2024 (2024-03-28) * figure 1 * * column 114 * | 1-15 | INV. G01F25/10 A01C23/00 A01M7/00 B05B12/00 |
| A | US 2018/042214 A1 (PREHEIM JOHN D [US] ET AL) 15 February 2018 (2018-02-15) * figures 1,5 * | 1-15 | |
| A | US 10 954 930 B2 (PREC PLANTING LLC [US]) 23 March 2021 (2021-03-23) * column 1, line 64 - column 2, line 17 * * figure 1 * | 1-15 | |

TECHNICAL FIELDS
SEARCHED    (IPC)

G01F
B65D
A01C
A01M
B05B

The present search report has been drawn up for all claims

| Place of search | Date of completion of the search | Examiner |
|---|---|---|
| The Hague | 22 September 2025 | Quertemont, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 6545

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2025

| Patent document cited in search report | Publication date | Patent family member(s) | Publication date |
|---|---|---|---|
| US 2024099288 A1 | 28-03-2024 | AU 2020358089 A1 | 14-04-2022 |
| | | BR 112022005501 A2 | 21-06-2022 |
| | | CA 3154863 A1 | 08-04-2021 |
| | | EP 4037482 A2 | 10-08-2022 |
| | | US 2024099288 A1 | 28-03-2024 |
| | | WO 2021067739 A2 | 08-04-2021 |
| US 2018042214 A1 | 15-02-2018 | BR 112016008517 B1 | 22-06-2021 |
| | | CA 2926448 A1 | 23-04-2015 |
| | | US 2016227755 A1 | 11-08-2016 |
| | | US 2018042214 A1 | 15-02-2018 |
| | | US 2020107538 A1 | 09-04-2020 |
| | | US 2022079132 A1 | 17-03-2022 |
| | | US 2024324580 A1 | 03-10-2024 |
| | | WO 2015058091 A1 | 23-04-2015 |
| US 10954930 B2 | 23-03-2021 | BR 112019015164 A2 | 24-03-2020 |
| | | EP 3582602 A1 | 25-12-2019 |
| | | ES 2912403 T3 | 25-05-2022 |
| | | LT 3582602 T | 25-05-2022 |
| | | US 2019360475 A1 | 28-11-2019 |
| | | US 2021071651 A1 | 11-03-2021 |
| | | WO 2018151989 A1 | 23-08-2018 |

EPO FORM P0459

For more details about this annex : see Official Journal of the European Patent Office, No. 12/82

**EP 4 653 826 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220264865 A
- WO 2021067739 A2
- WO 2021205245 A1
- US 20230025158
- US 63500536
- US 20220264865